# EUROPEAN PATENT SPECIFICATION

(11) **EP 2 518 743 B1**
(45) Date of publication and mention of the grant of the patent: **10.04.2019**
(21) Application number: 09852504.1
(22) Date of filing: 24.12.2009
(51) Int. Cl.: H01G 4/228, H01R 4/02

(54) **ELECTRONIC COMPONENT DEVICE**
ELEKTRONISCHES BAUELEMENT
DISPOSITIF À COMPOSANT ÉLECTRONIQUE

(43) Date of publication of application: 31.10.2012
(73) Proprietor: Mitsubishi Electric Corporation, Chiyoda-ku Tokyo 100-8310 (JP)
(72) Inventor: KURODA, Motokazu, Tokyo 102-0073 (JP); IWAMOTO, Shinji, Tokyo 100-8310 (JP)
(74) Representative: Hoffmann Eitle
(86) International application number: PCT/JP2009/007189
(87) International publication number: WO 2011/077487

(56) References cited:
- EP-B1- 1 495 518
- DE-A1- 10 002 703
- JP-A- 10 304 638
- JP-A- H10 304 638
- JP-A- 2000 260 230
- JP-A- 2001 229 985
- JP-A- 2005 522 841
- JP-A- 2009 272 181
- JP-U- S5 545 200
- US-A- 3 880 493
- US-A1- 2001 005 934
- US-A1- 2009 231 784

## Description

### Field of the Invention

The present invention relates to an electronic component apparatus attached to a brush holder of a vehicle AC generator or the like.

### Background Art

An electronic component apparatus in the related art, for example, a capacitor apparatus is attached to a plate of a brush holder of a vehicle AC generator.

The plate is made of resin by integral molding and serves also as a case forming a housing portion. Clamp portions provided integrally by insert molding are formed inside the case. A capacitor element is housed in the housing portion inside the case and lead wires from the capacitor element are connected to the respective clamp portions by soldering (for example, see WO 2008/142778 A1).

A specific configuration of a capacitor apparatus in the related art will now be described. A clamp portion is of substantially V shape before soldering and a tip end of a lead wire having a circular cross section is attached to a joint surface of the V shape.

Then, the tip end of the lead wire is caulked at the clamp portion. The tip end of the lead wire is caulked until the tip end is press-fit to the clamp portion and also until the clamp portion is shaped like a capital U. Thereafter, the tip end of the lead wire and the clamp portion are connected by soldering. Finally, resin is filled in the case for fixation.

EP 1 495 518 B1 refers to a junction between a flexible conductor and a connection terminal. According to EP 1 495 518 B1, a second element is provided that constitutes the junction, which second element is a flexible conductor which has an end part that is shaped so as to mate substantially with the inner walls of the slots.

A further document is DE 100 02 703 A1 which refers to a method for producing an electrically conducting joint via a laser beam. JP2009-272181 relates to the connection structure of a terminal and lead wire which connects the terminal and the conductive part of the lead wire in a laser beam welding process.

Yet further documents are US 3, 880, 493 A, JP S55 45200 U, and US 2009/231784 A1.

### Summary of the Invention

### Problems that the Invention is to Solve

In the capacitor apparatus in the related art, however, the lead wire of the capacitor element is a round wire having a circular cross section and the tip end, which is a portion joined to the clamp portion, is also a round wire having a circular cross section. Accordingly, an area jointed to solder is small and consequently joint strength to the clamp portion becomes weak.

Also, a caulking process is required when the tip end of the lead wire of the capacitor element and the clamp portion are joined. Hence, a connection process is complex and workability is poor.

The invention is devised to solve the problem described above and has an object to obtain an electronic component apparatus not only capable of enhancing joint strength between a lead wire of an element in an electronic component and a clamp portion but also capable of improving connection workability.

### Means for Solving the Problems

An electronic component apparatus according to the invention includes the features of claim 1.

### Advantage of the Invention

According to the invention, the tip ends of the lead wires of the element in the electronic component connected to the clamp portions are formed to have a non-circular cross section so as to conform to a shape of the clamp portions. Hence, because it becomes possible to increase a joint area between the lead wires and the clamp portions, joint strength can be enhanced. Also, by forming the tip ends of the lead wires to have a non-circular cross section, it becomes possible to form the tip ends in a shape suitable to a shape of the clamp portions. Accordingly, a range of application of the clamp portions and the lead wires can be widened, and not only can convenience be enhanced, but also the cost can be reduced. In addition, it becomes possible to omit a caulking process that is otherwise necessary to join the lead wires to the clamp portions. Hence, connection workability can be improved.

### Brief Description of the Drawings

Fig. 1 is an exploded perspective view of a major portion of a brush holder according to a first embodiment.
Fig. 2 is a front view of a capacitor apparatus according to the first embodiment.
Fig. 3 is a cross section taken on line A-A of Fig. 2.
Fig. 4 is a side view of the capacitor element according to the first embodiment.
Fig. 5 is a partial cross section showing a configuration of clamp portions according to the first embodiment.
Fig. 6 is a partial cross section showing a connection state of a lead wire of the capacitor element and the clamp portion according to an example not belonging to the invention and serving for a better understanding of the invention.
Fig. 7 is a cross section of a tip end of the lead wire of the capacitor element according to an example not belonging to the invention and serving for a better understanding of the invention.
Fig. 8 is a partial cross section showing a connection process of a lead wire of a capacitor element and a clamp portion according to the invention.
Fig. 9 is a partial cross section showing the connection process of the lead wire of the capacitor element and the clamp portion according to the invention.

### Mode for Carrying Out the Invention

Hereinafter, preferred embodiments of an electronic component apparatus of the invention will be described using the drawings.

### First Embodiment (not part of the invention)

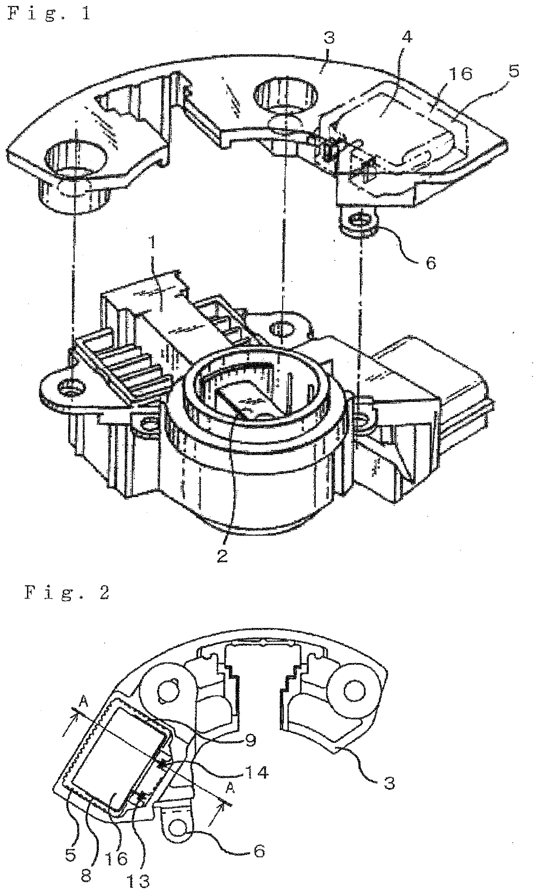

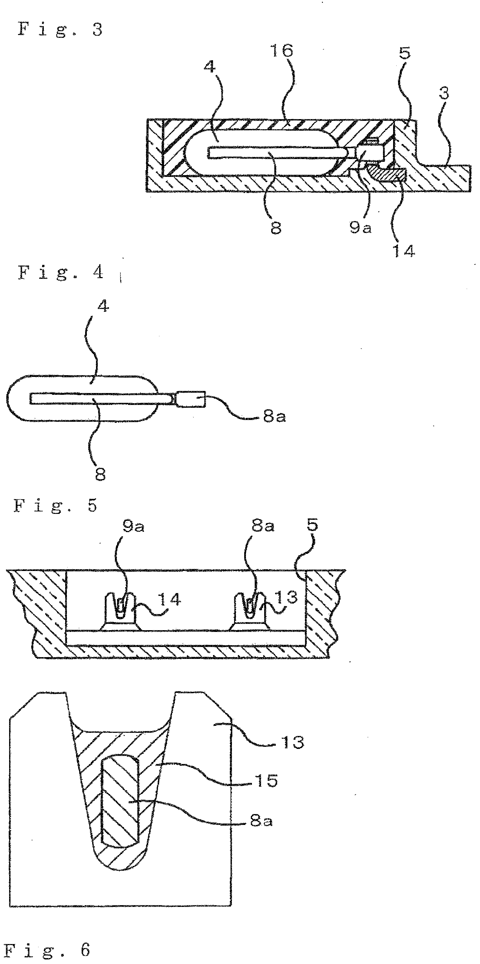

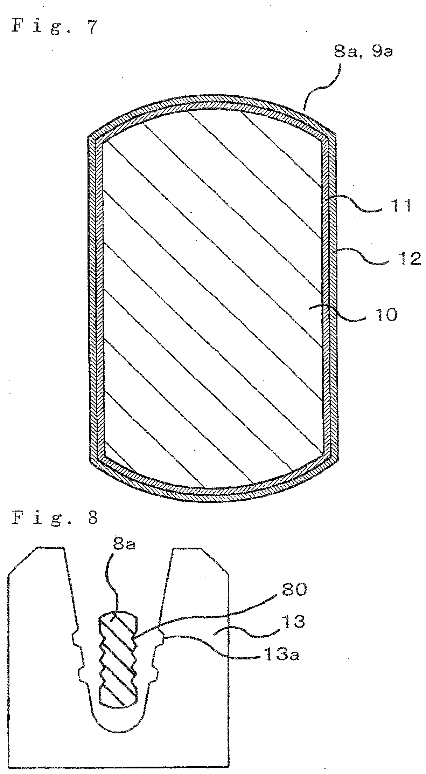

Fig. 1 is an exploded perspective view of a major portion of a brush holder according to a first embodiment. Fig. 2 is a front view of a capacitor apparatus according to the first embodiment. Fig. 3 is a cross section taken on line A-A of Fig. 2. Fig. 4 is a side view of a capacitor element according to the first embodiment. Fig. 5 is a partial cross section showing a configuration of clamp portions according to the first embodiment. Fig. 6 is a partial cross section showing a connection state of a lead wire of the capacitor element and the clamp portion according to the first embodiment. Fig. 7 is a cross section of a tip end of the lead wire of the capacitor element according to an example not belonging to the invention and serving for a better understanding of the invention.

Referring to Fig. 1, numeral 1 denotes a brush holder attached to a vehicle AC generator. The brush holder 1 has a brush 2 and a resin plate 3 is attached thereto in a detachable manner. The resin plate 3 serves also as a case for a capacitor element 4, which is an element in an electronic component. A housing portion 5 in which to house the capacitor element 4 is made of resin and formed integrally with the resin plate 3. Numeral 6 denotes a plus terminal and a minus terminal is embedded in the resin plate 3. The capacitor element 4 is attached inside the housing portion 5 and lead wires 8 and 9 each having a circular cross section are drawn out, respectively, from both sides of the capacitor element 4. The lead wires 8 and 9 are formed by coating an outer periphery of a steel wire 10 with copper 11 and by applying tin coating 12 on an outer periphery of the copper 11. Moreover, respective tip ends 8a and 9a of the lead wires 8 and 9 are formed to have an oval cross section as is shown in Fig. 7.

Inside the housing portion 5, two (plus and minus) clamp portions 13 and 14 are formed integrally by insert molding and fixed firmly. The clamp portions 13 and 14 are made of a conductor and formed to have a V-shaped tip end. The respective tip ends 8a and 9a of the lead wires 8 and 9 are connected to these V-shaped portions. Numeral 15 denotes solder connecting the respective tip ends 8a and 9a of the lead wires 8 and 9 to the clamp portions 13 and 14, respectively. The solder 15 is melted and firmly fixed in a state as is shown in Fig. 6. The respective tip ends 8a and 9a of the lead wires 8 and 9 of the capacitor element 4 are soldered to the clamp portions 13 and 14, respectively, inside the housing portion 5 first, and then mold resin 16 is filled in a space in the housing portion 5 for fixation.

The respective tip ends 8a and 9a of the lead wires 8 and 9 of the capacitor element 4 are formed to have an oval cross section by a round wire crushing process. As is shown in Fig. 5, the respective tip ends 8a and 9a of the lead wires 8 and 9 are attached to the V-shaped portions of the clamp portions 13 and 14, respectively. Then, as is shown in Fig. 6, the tip ends 8a and 9a are connected to the clamp portions 13 and 14, respectively, by soldering with the solder 15.

As is shown in Fig. 6 according to an example not belonging to the invention and serving for a better understanding of the invention a capacitor is used as the electronic component and it is possible to increase joint areas between the solder 15 and the respective tip ends 8a and 9a of the lead wires 8 and 9 of the capacitor element 4 as well as the clamp portions 13 and 14. Accordingly, joint strength can be enhanced. It thus becomes possible to ensure sufficient joint strength even when the invention is applied to lead-free soldering.

Also, each of the lead wires 8 and 9 having a circular cross section is crushed only at the tip ends and deformed to have an oval cross section suitable for the shape of the clamp portions 13 and 14. Hence, by adequately adjusting a degree of crushing of the lead wires 8 and 9, the lead wires 8 and 9 can conform to the clamp portions 13 and 14 of various shapes. Accordingly, a range of application is widened and convenience is enhanced.

Further, joint areas between the respective tip ends 8a and 9a of the lead wires 8 and 9 and the clamp portions 13 and 14, respectively, are increased. Hence, in a case where these portions are joined by electrical resistance welding or the like, a temperature rise can be suppressed.

Moreover, it becomes possible to omit a caulking process that is otherwise necessary to join the respective tip ends 8a and 9a of the lead wires 8 and 9 to the clamp portions 13 and 14, respectively. Hence, connection workability can be improved.

### Second Embodiment

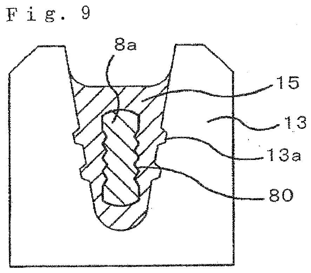

Fig. 8 and Fig. 9 are partial cross sections of a major portion of a capacitor apparatus according to the invention.

Referring to Fig. 8 and Fig. 9, a concavo-convex portion 80 is formed to the respective tip ends 8a and 9a of the lead wires 8 and 9 of the capacitor element 4. Concavo-convex potions 13a and 14a are formed on V-shaped joint surfaces of the clamp portions 13 and 14, respectively, in a corresponding manner to the concavo-convex portions 80 of the lead wires 8 and 9, respectively.

According to the invention, a joint area between the solder 15 and the respective tip ends 8a and 9a of the lead wires 8 and 9 and the clamp portions 13 and 14 is large. Hence, joint strength can be enhanced further.

The above has described a case where joint portions of the clamp portions 13 and 14 are of a V shape (including substantially a V shape) by way of example. It should be appreciated, however, that the same advantages can be achieved even when the joint portions are formed in a U shape (including substantially a U shape).

Also, the respective embodiments above have described a case where the invention is applied to the vehicle AC generator by way of example. It should be appreciated, however, that applications of the invention are not limited to the vehicle AC generator and the invention is also applicable to those using a capacitor apparatus of this type.

Further, the respective embodiments above have described a case where a capacitor is used as an electronic component by way of example. It should be appreciated, however, that the electronic component is not limited to capacitors and the same advantages as those of the respective embodiments above can be achieved even in a case where diodes, transistors, thyristors, ICs (integrated circuits), and the like are used as the electronic component.

Furthermore, the respective embodiments above have described a case where the clamp portions are provided integrally with the case by way of example. It should be appreciated, however, that the invention is also applicable to a case where the clamp portions are not provided to the case.

### Industrial Applicability

The invention is applied to an electronic component apparatus.

### Description of Reference Numerals and Signs

1: brush holder
3: resin plate
4: capacitor element
5: housing portion
6: terminal
8 and 9: lead wire
8a and 9a: tip end
10: steel wire
11: copper
12: tin coating
13 and 14: clamp portion
13a and 14a: concavo-convex portion
15: solder
16: mold resin
80: concave-convex portion of the lead wire

## Claims

1. An electronic component apparatus comprising:
clamp portions (13, 14) each of which is made of a conductor shaped like a capital V or U; and
an electronic component that has lead wires (8, 9) drawn out from an element in the electronic component to be connected to the clamp portions (13, 14) at tip ends (8a, 9a), wherein
the tip ends (8a, 9a) of the lead wires (8, 9) to be connected to the clamp portions (13, 14) are formed to have a non-circular cross section so as to conform to a shape of the clamp portions (13, 14), 1, **characterized in that**:
the tip ends (8a, 9a) of the lead wires (8, 9) are soldered to the clamp portions (13, 14) or the tip ends (8a, 9a) of the lead wires (8, 9) are connected to the clamp portions (13, 14) by resistance welding,
and **in that** the lead wires (8, 9) are provided with a concavity and a convexity (80) on surfaces to be joined to the clamp portions (13, 14), and
the clamp portions (13, 14) are provided with a concavity and a convexity (13a) on surfaces to be joined to the lead wires (8, 9) in a manner corresponding to the concavity and the convexity (80) provided on the lead wires (8, 9).

2. The electronic component apparatus according to claim 1, **characterized in that**:
the tip ends (8a, 9a) of the lead wires (8, 9) are formed to have an oval cross section.

3. The electronic component apparatus according to claim 2, **characterized in that**:
the lead wires (8, 9) are formed to have the oval cross section at the tip ends (8a, 9a) alone and a rest is formed to have a circular cross section.

4. The electronic component apparatus according to any one of claims 1 through 3, **characterized in that**:
the lead wires (8, 9) are formed by attaching copper on an outer periphery of a steel wire.

5. The electronic component apparatus according to claim 4, **characterized in that**:
the lead wires (8, 9) are formed by coating a steel wire with copper and applying tin coating on an outer periphery of the copper.

6. The electronic component apparatus according to any one of claims 1 through 5, **characterized in that**:
the tip ends (8a, 9a) of the lead wires (8, 9) are formed to have an oval cross section by crushing a round wire.

7. The electronic component apparatus according to any one of claims 1 through 6, **characterized in that**:
the clamp portions (13, 14) are provided to a case having a housing portion (5), and
the element in the electronic component is attached inside the housing portion (5).

8. The electronic component apparatus according to claim 7, **characterized in that**:
the housing portion (5) of the case is filled with resin that electrically isolates and firmly fixes the element in the electronic component.

9. The electronic component apparatus according to claim 7 or 8, **characterized in that**:
the case is made of resin.

10. The electronic component apparatus according to any one of claims 7 through 9, **characterized in that**:
the case is attached to a brush holder (1) of a vehicle AC generator.

11. The electronic component apparatus according to any one of claims 1 through 10, **characterized in that**:
the lead wires (8, 9) are drawn out, respectively, from both sides of the element in the electronic component, and
the two lead wires (8, 9) are connected to the two clamp portions (13, 14), respectively.

12. The electronic component apparatus according to any one of claims 7 through 11, **characterized in that**:
the clamp portions (13, 14) are formed integrally with the case by insert molding.

13. The electronic component apparatus according to any one of claims 7 through 12, **characterized in that**:
the electronic component is a capacitor (4).

## Patentansprüche

1. Vorrichtung mit elektronischem Bauteil, aufweisend:
Klemmabschnitte (13, 14), die jeweils aus einem Leiter bestehen, der wie ein großes V oder U geformt ist; und
ein elektronisches Bauteil, von dem Anschlussdrähte (8, 9) aus einem Element im elektronischen Bauteil herausgezogen sind, um an Endbereichen (8a, 9a) an die Klemmabschnitte (13, 14) angeschlossen zu werden, wobei
die an die Klemmabschnitte (13, 14) anzuschließenden Endbereiche (8a, 9a) der Anschlussdrähte (8, 9) mit einem nicht kreisförmigen Querschnitt ausgebildet sind, so dass sie einer Form der Klemmabschnitte (13, 14) entsprechen, **dadurch gekennzeichnet, dass**:
die Endbereiche (8a, 9a) der Anschlussdrähte (8, 9) mit den Klemmabschnitten (13, 14) verlötet sind oder die Endbereiche (8a, 9a) der Anschlussdrähte (8, 9) an die Klemmabschnitte (13, 14) durch Widerstandsschweißen angeschlossen sind,
und dass die Anschlussdrähte (8, 9) an Oberflächen, die mit den Klemmabschnitten (13, 14) zu verbinden sind, mit einem Aussparungs- bzw. Vorsprungsbereich (80) versehen sind, und
die Klemmabschnitte (13, 14) an Oberflächen, die mit den Anschlussdrähten (8, 9) zu verbinden sind, mit einem Aussparungs- bzw. Vorsprungsbereich (13a) versehen sind, der dem an den Anschlussdrähten (8, 9) vorgesehenen Aussparungs- bzw. Vorsprungsbereich (80) entspricht.

2. Vorrichtung mit elektronischem Bauteil, nach Anspruch 1, **dadurch gekennzeichnet, dass**:
die Endbereiche (8a, 9a) der Anschlussdrähte (8, 9) mit einem ovalen Querschnitt ausgebildet sind.

3. Vorrichtung mit elektronischem Bauteil, nach Anspruch 2, **dadurch gekennzeichnet, dass**:
die Anschlussdrähte (8, 9) nur an den Endbereichen (8a, 9a) mit dem ovalen Querschnitt ausgebildet sind und der Rest mit einem kreisförmigen Querschnitt ausgebildet ist.

4. Vorrichtung mit elektronischem Bauteil, nach einem der Ansprüche 1 bis 3, **dadurch gekennzeichnet, dass**:
die Anschlussdrähte (8, 9) gebildet werden, indem Kupfer auf einem Außenumfang eines Stahldrahts aufgebracht wird.

5. Vorrichtung mit elektronischem Bauteil, nach Anspruch 4, **dadurch gekennzeichnet, dass**:
die Anschlussdrähte (8, 9) gebildet werden, indem ein Stahldraht mit Kupfer beschichtet und dann eine Zinnbeschichtung auf einem Außenumfang des Kupfers aufgebracht wird.

6. Vorrichtung mit elektronischem Bauteil, nach einem der Ansprüche 1 bis 5, **dadurch gekennzeichnet, dass**:
die Endbereiche (8a, 9a) der Anschlussdrähte (8, 9) mit einem ovalen Querschnitt ausgebildet werden, indem ein runder Draht gequetscht wird.

7. Vorrichtung mit elektronischem Bauteil, nach einem der Ansprüche 1 bis 6, **dadurch gekennzeichnet, dass**:
die Klemmabschnitte (13, 14) einem Gehäuse mit einem Aufnahmeabschnitt (5) bereitgestellt werden, und
das Element im elektronischen Bauteil im Inneren des Aufnahmeabschnitts (5) angebracht wird.

8. Vorrichtung mit elektronischem Bauteil, nach Anspruch 7, **dadurch gekennzeichnet, dass**:
der Aufnahmeabschnitt (5) des Gehäuses mit einem Kunststoff befüllt wird, der das Element im elektronischen Bauteil elektrisch isoliert und fest fixiert.

9. Vorrichtung mit elektronischem Bauteil, nach Anspruch 7 oder 8, **dadurch gekennzeichnet, dass**:
das Gehäuse aus Kunststoff besteht.

10. Vorrichtung mit elektronischem Bauteil, nach einem der Ansprüche 7 bis 9, **dadurch gekennzeichnet, dass**:
das Gehäuse an einem Bürstenträger (1) eines Fahrzeug-Wechselstromgenerators angebracht wird.

11. Vorrichtung mit elektronischem Bauteil, nach einem der Ansprüche 1 bis 10, **dadurch gekennzeichnet, dass**:
die Anschlussdrähte (8, 9) jeweils aus einer Seite des Elements im elektronischen Bauteil herausgezogen sind, und
die beiden Anschlussdrähte (8, 9) jeweils an einen der beiden Klemmabschnitte (13, 14) angeschlossen sind.

12. Vorrichtung mit elektronischem Bauteil, nach einem der Ansprüche 7 bis 11, **dadurch gekennzeichnet, dass**:
die Klemmabschnitte (13, 14) mit dem Gehäuse durch einen Umspritzvorgang einstückig ausgebildet sind.

13. Vorrichtung mit elektronischem Bauteil, nach einem der Ansprüche 7 bis 12, **dadurch gekennzeichnet, dass**:
das elektronische Bauteil ein Kondensator (4) ist.

## Revendications

1. Dispositif à composant électronique comprenant :
des parties de serrage (13, 14) constituées chacune d'un conducteur en forme de V ou de U majuscule ; et
un composant électronique doté de fils conducteurs (8, 9) tirés depuis un élément du composant électronique et destinés à être connectés aux parties de serrage (13, 14) à des extrémités de pointe (8a, 9a), les extrémités de pointe (8a, 9a) des fils conducteurs (8, 9) destinés à être connectés aux parties de serrage (13, 14) étant formées pour posséder une section transversale non circulaire de manière à épouser une forme des parties de serrage (13, 14), 1, **caractérisé en ce que** :
les extrémités de pointe (8a, 9a) des fils conducteurs (8, 9) sont soudées aux parties de serrage (13, 14) ou les extrémités de pointe (8a, 9a) des fils conducteurs (8, 9) sont connectées aux parties de serrage (13, 14) par soudage par résistance,
et **en ce que** les fils conducteurs (8, 9) sont pourvus d'une concavité et d'une convexité (80) sur des surfaces destinées à être unies aux parties de serrage (13, 14), et
les parties de serrage (13, 14) sont pourvues d'une concavité et d'une convexité (13a) sur des surfaces destinées à être unies aux fils conducteurs (8, 9) d'une manière correspondant à la concavité et à la convexité (80) prévues sur les fils conducteurs (8, 9).

2. Dispositif à composant électronique selon la revendication 1, **caractérisé en ce que** :
les extrémités de pointe (8a, 9a) des fils conducteurs (8, 9) sont formées pour posséder une section transversale ovale.

3. Dispositif à composant électronique selon la revendication 2, **caractérisé en ce que** :
les fils conducteurs (8, 9) sont formés pour posséder la section transversale ovale aux seules extrémités de pointe (8a, 9a) et le reste est formé pour posséder une section transversale circulaire.

4. Dispositif à composant électronique selon l'une quelconque des revendications 1 à 3, **caractérisé en ce que** :
les fils conducteurs (8, 9) sont formés par fixation de cuivre sur une périphérie externe d'un fil d'acier.

5. Dispositif à composant électronique selon la revendication 4, **caractérisé en ce que** :
les fils conducteurs (8, 9) sont formés par revêtement d'un fil d'acier avec du cuivre et application d'un revêtement d'étain sur une périphérie externe du cuivre.

6. Dispositif à composant électronique selon l'une quelconque des revendications 1 à 5, **caractérisé en ce que** :
les extrémités de pointe (8a, 9a) des fils conducteurs (8, 9) sont formées pour posséder une section transversale ovale par écrasement d'un fil rond.

7. Dispositif à composant électronique selon l'une quelconque des revendications 1 à 6, **caractérisé en ce que** :
les parties de serrage (13, 14) sont prévues sur un boîtier possédant une partie de logement (5), et
l'élément du composant électronique est fixé à l'intérieur de la partie de logement (5).

8. Dispositif à composant électronique selon la revendication 7, **caractérisé en ce que** :
la partie de logement (5) du boîtier est remplie d'une résine qui isole électriquement et maintient fermement l'élément dans le composant électronique.

9. Dispositif à composant électronique selon les revendications 7 ou 8, **caractérisé en ce que** :
le boîtier est en résine.

10. Dispositif à composant électronique selon l'une quelconque des revendications 7 à 9, **caractérisé en ce que** :
le boîtier est fixé à un porte-balai (1) d'un générateur de courant alternatif de véhicule.

11. Dispositif à composant électronique selon l'une quelconque des revendications 1 à 10, **caractérisé en ce que** :
les fils conducteurs (8, 9) sont tirés, respectivement, depuis les deux côtés de l'élément du composant électronique, et
les deux fils conducteurs (8, 9) sont connectés aux deux parties de serrage (13, 14), respectivement.

12. Dispositif à composant électronique selon l'une quelconque des revendications 7 à 11, **caractérisé en ce que** :
les parties de serrage (13, 14) sont formées d'un seul tenant avec le boîtier par moulage par insertion.

13. Dispositif à composant électronique selon l'une quelconque des revendications 7 à 12, **caractérisé en ce que** :
le composant électronique est un condensateur (4).
